# EUROPEAN PATENT APPLICATION

(11) **EP 1 571 076 A1**
(43) Date of publication of application: **07.09.2005**
(21) Application number: 04425152.8
(22) Date of filing: 05.03.2004
(51) Int. Cl.: B62M 9/12

(54) **Device for the attachment of a derailleur to a bicycle and derailleur comprising such an attachment device**

(71) Applicant: CAMPAGNOLO S.R.L., I-36100 Vicenza (IT)
(72) Inventor: Valle, Maurizio, 36100 Vicenza (IT); Pasqua, Paolo, 36100 Vicenza (IT)
(74) Representative: Castiglia, Paolo

(57) **Abstract**

A device (10) for the attachment of a derailleur to a bicycle, in particular for the attachment of a front derailleur (100) to a support (300) welded on a seat tube (200) of a bicycle, comprises means for adjusting the position of the derailleur (100) along at least one axis substantially perpendicular to a longitudinal axis of the seat tube (200) of a bicycle. In particular, the device (10) comprises means for adjusting the position of the derailleur (100) along an axis Y lying on a plane substantially parallel to a lying plane of a toothed crown of the bottom bracket of a bicycle and, preferably, also along an axis Z substantially perpendicular to said lying plane of a toothed crown of the bottom bracket. This ensures a better positioning of the derailleur (100) with respect to the toothed crowns of the bicycle and, therefore, a better operation of the derailleur (100) during gearshifting.

## Description

The present invention relates to a device for the attachment of a derailleur to a bicycle. More specifically, the invention relates to a device for the attachment of a derailleur to a bicycle frame with the possibility of adjusting the position of the derailleur on the frame. The invention also relates to a derailleur comprising such an attachment device.

Throughout the present description and the subsequent claims, the derailleur to which reference is made is a derailleur for a front gearshift of a bicycle, more simply known as front derailleur.

As is known, the front derailleur is used in bicycles to carry out gearshifting, i.e. to move the chain, during travel, between the different toothed crowns of different diameter associated with the pedal cranks and constituting the bottom bracket of the bicycle.

In particular, the derailleur comprises an articulated quadrilateral kinematism intended to be integrally fixed to the bicycle frame and to a chain-guiding fork; the deformation of the articulated quadrilateral causes the displacement of the fork over the toothed crowns and therefore the gearshifting.

The aforementioned deformation of the articulated quadrilateral can be obtained manually, through the movement of control levers transmitted to the articulated quadrilateral through Bowden cables, or else with an electric motor following an appropriate command imparted by the cyclist and through a suitable kinematism. In particular, the cable or the motor act on an actuation arm which constitutes the extension of a connecting rod of the articulated quadrilateral.

An example of a front derailleur actuated through a Bowden cable can be found in patent application US 2002/0034996 A1 to the same Applicant, whereas an example of a front derailleur actuated through an electric motor can be found in patent application US 2003/0027674 A1 to the same Applicant.

Typically, the front derailleur is mounted on the seat tube of the bicycle, i.e. on the tube that connects the bottom bracket of the bicycle to the saddle. The attachment of the derailleur to the seat tube is generally carried out according to two known techniques.

In accordance with a first known technique, illustrated as an example in the patent applications identified above, the derailleur is fixed to the seat tube through a metal clamp attached to the derailleur itself and adapted to be tightened around the seat tube through suitable screws. In the assembly steps the clamp is displaced longitudinally on the seat tube until the derailleur is brought at the position considered optimal above the toothed crowns of the bottom bracket; the clamp is then clamped around the seat tube so as to keep the derailleur in the desired position above the aforementioned toothed crowns.

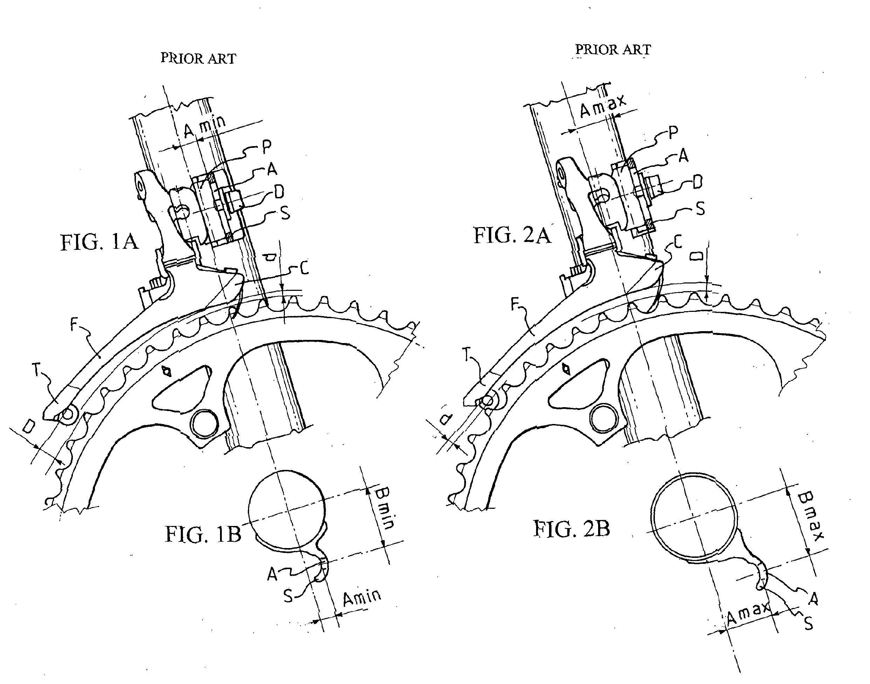

In accordance with a second known technique, illustrated as an example in figures 1 and 2 attached to the present description, the derailleur is fixed to a suitable support S welded to the seat tube, commonly known as braze-on attachment. Such a support S essentially consists of a metallic element having a convex cylindrical surface and provided with a slot A extending longitudinally along the direction of the axis of the seat tube. To allow the attachment of the derailleur to such a support S, the derailleur is provided with a connection element P of a substantially cylindrical shape matching the shape of the support S. The connection element P is fixed to the support S through a screw integrally associated with the connection element P and adapted to be engaged into a suitable lock nut D through the slot A of the support S. In the assembly steps of the derailleur on the seat tube of the bicycle the connection element P is firstly brought into abutment against the support S, with the screw inserted in the slot A of the support S. The connection element P is then moved on the support S parallel to the longitudinal axis of the seat tube until the derailleur is brought at the position considered optimal above the toothed crowns of the bottom bracket. The connection element P is finally fixed to the support S by screwing the lock nut D onto the screw.

The Applicant has noted some drawbacks associated with the latter technique of attachment of the derailleur to the seat tube of the bicycle.

A first drawback is correlated to the fact that the braze-on attachments conventionally used are not standard; in particular, their position with respect to the axis of the seat tube, as well as their shape, can vary as the size and/or shape of the seat tube itself varies. This means that it is not possible to position the derailleur at the position considered optimal above the toothed crowns, with the consequent improper operation of the derailleur during gearshifting.

This concept is illustrated as an example in the attached figures 1 and 2. In such figures, figure 1A is a front view of a derailleur of the prior art mounted on a first type of braze-on attachment S; figure 1B shows in particular such a first type of braze-on attachment S, with the slot A that is positioned with an eccentricity (Amin, Bmin) with respect to the longitudinal axis of the seat tube; figure 2A is a front view of a derailleur of the prior art mounted on a second type of braze-on attachment S and on a seat tube having a shape and size different than those represented in figure 1A and 1B; figure 2B shows in particular such a second type of braze-on attachment S, with the slot A that is positioned with an eccentricity (Amax, Bmax) with respect to the longitudinal axis of the seat tube.

Figures 1 and 2 show how the use of braze-on attachments of different shapes and/or the different positioning of the braze-on attachment on the seat tube involves a different positioning of the fork F of the derailleur above the toothed crowns. In particular, figures 1 and 2 show two different attachment configurations in which the distance of the lower profile of the fork F with respect to the circumference of the toothed crown with a greater diameter is not constant between the head T and the tail C of the fork (as would, however, be desirable), but varies from a maximum value D to a minimum value d in the configuration of figure 1, and from a minimum value d to a maximum value D in the configuration of figure 2. Such a variation in distance along the lower profile of the fork F causes non-optimal operation of the derailleur during gearshifting and a corresponding unhomogeneous distribution of the forces applied by the chain on the fork F between the head T and the tail C thereof.

A second drawback associated with the technique of attachment of the derailleur to the seat tube of the bicycle through braze-on attachments is correlated to the fact that the forces to which the derailleur is subjected during gearshifting, i.e. during the deformation of the articulated quadrilateral, all discharge onto the braze-on attachment, which in the long term can therefore deform or even break, thus compromising the operation of the derailleur.

The Applicant has thus thought and designed a technique for the attachment of the derailleur to a bicycle that, also in the case of use of conventional braze-on attachments, i.e. braze-on attachments of different shapes and positioned differently on the seat tube of the bicycle, always allows an optimal positioning of the derailleur above the toothed crowns of the bottom bracket of the bicycle to be achieved, thus overcoming the drawbacks discussed above with reference to the prior art.

The Applicant has also found a way to avoid that all of the forces to which the derailleur is subjected during gearshifting, i.e. during the deformation of the articulated quadrilateral, be discharged exclusively on the braze-on attachment, so as to safeguard its structural and functional integrity.

The present invention therefore relates, in a first aspect thereof, to a device for the attachment of a derailleur to a bicycle, characterised in that it comprises first means for adjusting the position of the derailleur along at least one axis substantially perpendicular to a longitudinal axis of a seat tube of a bicycle.

Advantageously, the device of the present invention thus allows the attachment of the derailleur to the bicycle at the same time allowing an adjustment of the position of the derailleur in the plane perpendicular to the longitudinal axis of the seat tube of the bicycle; this ensures a better positioning of the derailleur above the toothed crowns of the bottom bracket of the bicycle and, therefore, a better operation of the derailleur during gearshifting.

In a first embodiment of the device of the present invention, the aforementioned first means for adjusting the position of the derailleur comprise means for adjusting the position of the derailleur along an axis Y lying on a plane substantially parallel to a lying plane of a toothed crown of the bottom bracket of the bicycle and perpendicular to the longitudinal axis of the seat tube. In such an embodiment it is advantageously possible to position the derailleur above the toothed crowns of the bottom bracket of the bicycle so that the distance of the lower profile of the fork with respect to the perimeter of the toothed crowns is substantially constant between the head and the tail of the fork. Such a positioning configuration is, indeed, considered optimal for the correct operation of the derailleur and ensures homogeneous distribution along the entire profile of the fork of the forces applied by the chain during gearshifting.

In a second embodiment of the device of the present invention, the aforementioned first means for adjusting the position of the derailleur comprise means for adjusting the position of the derailleur along an axis Z substantially perpendicular to a lying plane of a toothed crown of the bottom bracket of the bicycle. In such an embodiment it is advantageously possible to displace the derailleur towards the seat tube of the bicycle until it is brought into abutment against said seat tube. Such a positioning configuration is considered advantageous since it allows part of the forces generated by the deformation of the quadrilateral to be discharged directly on the seat tube, thus avoiding such forces being discharged on the braze-on attachment.

In a particularly preferred embodiment of the device of the present invention, the device of the present invention comprises both the aforementioned means for adjusting the position of the derailleur along the axis Y and the aforementioned means for adjusting the position of the derailleur along the axis Z, so as to achieve all of the advantages highlighted above with reference to the two embodiments of the present invention discussed above, and to overcome all of the drawbacks mentioned above with reference to the prior art.

In the preferred embodiment thereof, the device of the present invention also comprises second means for adjusting the position of the derailleur along an axis X substantially parallel to the longitudinal axis of the seat tube. Basically, the device of the invention, in the preferred embodiment thereof, allows an attachment of the derailleur to the bicycle with three degrees of freedom (two more than the attachment devices of the prior art), thus ensuring an optimal adjustment of the position of the derailleur above the toothed crowns of the bottom bracket of the bicycle.

Preferably, the means for adjusting the position of the derailleur along the axis Y comprise:
- a pin adapted to be integrally associated with a support integrally associated with the seat tube and extending along the axis Y;
- a derailleur support element adapted to be slidably associated with the pin along the axis Y;
- first clamping means of the derailleur support element on the pin.

The adjustment of the position of the derailleur along the axis Y is thus achieved, in a structurally simple and functionally advantageous way, by providing a sliding coupling between pin and derailleur support element. Once the derailleur has been brought at the position considered optimal along the axis Y, the derailleur is fixed in such a position simply by clamping the derailleur support element on the sliding pin through suitable clamping means.

In a first embodiment of the device of the present invention, the derailleur support element is integrally formed with a connecting rod of an articulated quadrilateral for commanding the fork of the derailleur. However, an alternative embodiment of the device of the present invention is foreseen, in which said derailleur support element is a body that is structurally independent from the aforementioned connecting rod and is adapted to be integrally associated with such a connecting rod through conventional attachment means.

Throughout the present description and the subsequent claims, with the term "connecting rod" we generically mean a rigid element suitable for transmitting the motion to, and/or receiving the motion from, other elements to which it is connected by a pin.

Preferably, the derailleur support element comprises a first side surface provided with a first opening for the passage of the aforementioned pin and a second side surface substantially perpendicular to the aforementioned first side surface and provided with a second opening, and in which the aforementioned first means for clamping the derailleur support element on the pin comprise:
- a pawl provided with a first through hole extending along a first direction and defining a clamping surface for said pin, and with a first threaded hole extending along a second direction perpendicular to the aforementioned first direction;
- a threaded element adapted to be engaged in said first threaded hole of the pawl through the aforementioned second opening of the derailleur support element to clamp the pawl against the derailleur support element;
- thrusting means acting between the pin and the derailleur support element to force the pin against the aforementioned clamping surface when the threaded element is engaged in the aforementioned first threaded hole of the pawl.

The relative sliding between pin and derailleur support element along the axis Y is thus achieved through sliding of the pin in the aforementioned first opening of the pin support element and in the through hole of the pawl, whereas the clamping of the derailleur support element on the pin at the desired position along the axis Y is achieved through forcing of the pin against the clamping surface defined in the pawl.

Preferably, the aforementioned thrusting means comprise a collar adapted to be fitted over the pawl at the aforementioned first threaded hole and provided with a pair of thrusting surfaces adapted to force the pin against the aforementioned clamping surface when the threaded element is engaged in the aforementioned first threaded hole of the pawl.

Preferably, the aforementioned thrusting surfaces are substantially flat. Even more preferably, the pin comprises a substantially flat portion of side surface adapted to cooperate in abutment with the aforementioned substantially flat thrusting surfaces of the collar to prevent any relative rotation between pin and derailleur support element during the clamping of the derailleur support element on the pin and in operation; the occurrence of such a rotation would, indeed, compromise the optimal positioning of the derailleur above the toothed crowns and, consequently, the correct operation thereof.

In order to ensure a better mutual engagement between the surface of the pin and the clamping surface defined in the pawl, and therefore in order to avoid undesired displacements of the derailleur from its optimal position along the axis Y during the clamping operations and in operation, the pin preferably comprises a knurled side surface. Even more preferably, the side surface of the pin is knurled longitudinally, so as to ensure, in addition to the aforementioned characteristic of mutual engagement between pin and clamping surface defined in the pawl, also characteristics of continuous and uniform sliding along the axis Y, so as to be able to carry out a fine adjustment of the position of the derailleur along the axis Y.

In the preferred embodiment of the device of the present invention, both the aforementioned first opening and the aforementioned second opening have respective slotted holes extending along a direction substantially perpendicular to the axis Y and to the longitudinal axis of the seat tube, so as to allow the adjustment of the derailleur, in addition to along the aforementioned axis Y, also along the aforementioned axis Z. However, less preferred embodiments, which are nevertheless considered of interest, can be foreseen, in which one of the aforementioned first and second opening, or both, has a circular hole with substantially the same diameter as the diameter of the pin and/or of the aforementioned attachment element. In such less preferred embodiments it is still possible to carry out the adjustment of the position of the derailleur along the aforementioned axis Y, whereas any possibility of adjusting the position of the derailleur along the aforementioned axis Z is prevented.

Preferably, in the case in which it is possible to adjust the position of the derailleur along the aforementioned axis Z, the collar comprises a surface that is knurled at the opposite side to said pair of thrusting surfaces, to increase the friction with the derailleur support element during the clamping thereof on the pin, thus avoiding undesired displacements of the derailleur from its optimal position along the axis Z during the clamping operations of the derailleur support element on the pin and in operation.

Preferably, the device of the present invention comprises a screw provided with a head with a diameter greater than the diameter of the pin and in which the pin comprises a threaded hole with a head adapted to engage said screw. Advantageously, the use of such a screw prevents the group consisting of the pawl and the collar from coming away from the pin during the assembly operations of the attachment device of the invention and/or the adjustment operations of the position of the derailleur along the axis Y and/or Z.

In the preferred embodiment of the device of the present invention, the pin is integrally associated with an interconnection element having a cylindrical surface of a shape matching the surface of the aforementioned support and in which the interconnection element is adapted to be integrally associated with the aforementioned support through second clamping means adjustable in position along a direction substantially parallel to said longitudinal axis of the seat tube. In such an embodiment, the device of the invention advantageously allows, in addition to the adjustment of the position of the derailleur along the axis Y and/or the axis Z, also the adjustment of the position of the derailleur along the longitudinal direction of the seat tube, thus allowing the derailleur to be positioned at the optimal spatial position thereof above the toothed crowns of the bottom bracket of the bicycle.

Preferably, the aforementioned second clamping means comprise a screw integrally associated with the interconnection element at the opposite side to the pin, said screw being adapted to be engaged in a nut screw through a slot formed in the aforementioned support and extending parallel to the longitudinal axis of the seat tube.

In a second aspect thereof, the present invention relates to a derailleur for a bicycle gearshift, comprising:
- a fork;
- an articulated quadrilateral kinematism for commanding the fork;
- a device for the attachment of the articulated quadrilateral kinematism to a bicycle;
characterised in that said attachment device is an attachment device in accordance with the present invention.

Such a derailleur allows all of the advantages discussed above with reference to the attachment device of the present invention to be achieved.

Preferably, the aforementioned attachment device comprises a support element of the articulated quadrilateral kinematism adapted to be associated with a support integrally associated with the seat tube of the bicycle, in which the aforementioned support element of the articulated quadrilateral kinematism is integrally formed with a connecting rod of the articulated quadrilateral kinematism.

In an alternative embodiment, the support element of the articulated quadrilateral kinematism is a body that is structurally independent from, and able to be integrally associated with, the aforementioned connecting rod of the articulated quadrilateral.

Further characteristics and advantages of the present invention shall become clearer from the following detailed description of some preferred embodiments thereof, made with reference to the attached drawings. In such drawings:
- figure 1A is a schematic front view of a derailleur of the prior art mounted on a first type of braze-on attachment;
- figure 1B is a schematic view from above of only the braze-on attachment of figure 1A associated with the relative seat tube;
- figure 2A is a schematic front view of a derailleur of the prior art mounted on a second type of braze-on attachment and on a seat tube having shape and size different than those represented in figure 1A and 1B;
- figure 2B is a schematic view from above of only the braze-on attachment of figure 2A associated with the relative seat tube;
- figure 3 is an exploded schematic perspective view with partially removed parts of a first embodiment of a device for the attachment of a derailleur in accordance with the present invention;
- figure 4 is a schematic perspective view with partially removed parts of the device of figure 3 in assembled configuration;
- figure 5 is a schematic front view of a derailleur associated with a first type of braze-on attachment through the attachment device of figure 3;
- figure 6 is a schematic view from above of the attachment device of figure 3 associated with the type of braze-on attachment illustrated in figure 5;
- figure 7 is a schematic front view of the derailleur of figure 5 associated with a second type of braze-on attachment through the attachment device of figure 3;
- figure 8 is a schematic view from above of the attachment device of figure 3 associated with the type of braze-on attachment illustrated in figure 7;
- figure 9 is an exploded schematic perspective view of a second embodiment of a device for the attachment of a derailleur in accordance with the present invention;
- figure 10 is an exploded schematic perspective view with partially removed parts of a third embodiment of a device for the attachment of a derailleur in accordance with the present invention.

In such figures, a derailleur in accordance with the present invention is wholly indicated with 100. The derailleur 100 is, in particular, a derailleur for a front gearshift of a bicycle.

In all of the figures, the structurally or functionally equivalent elements are indicated with the same reference numerals.

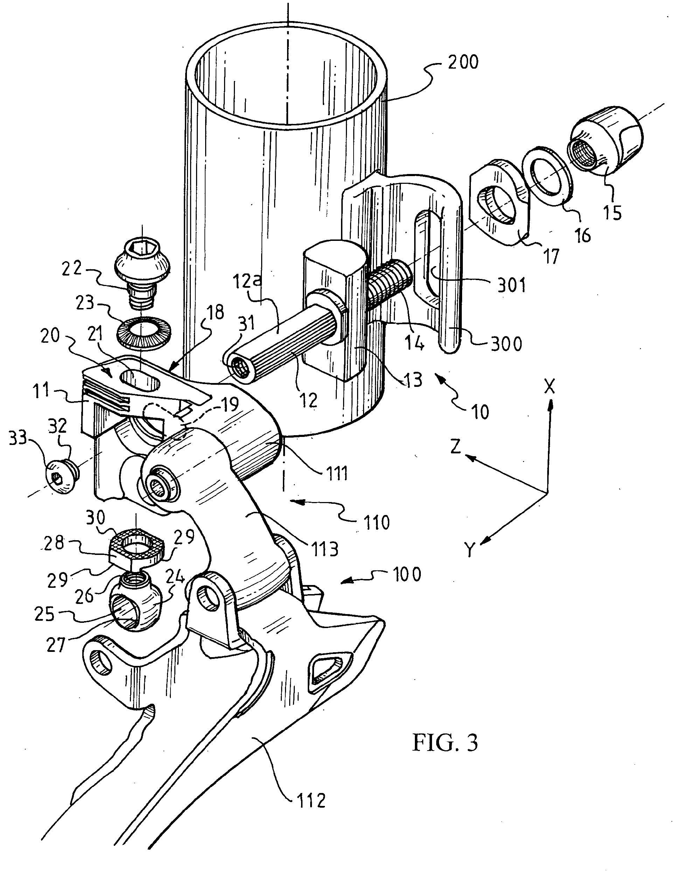

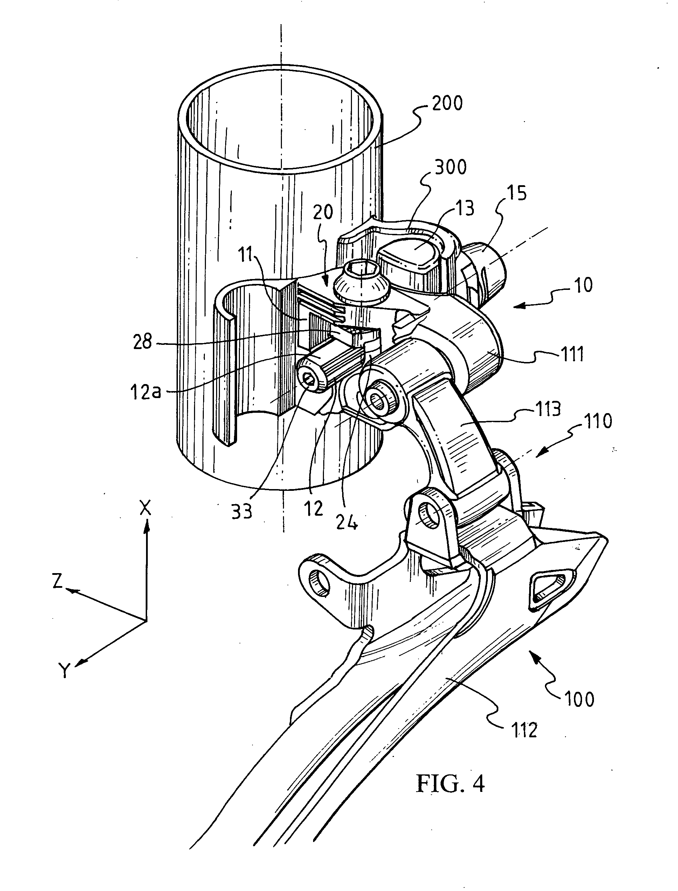

With particular reference to the embodiment illustrated in figures 3 and 4, the derailleur 100 of the present invention comprises an articulated quadrilateral kinematism 110 intended to be commanded through a Bowden cable or through an electric motor and in a totally conventional manner to move the chain from one toothed crown of the bottom bracket of the bicycle to another toothed crown of different diameter. The articulated quadrilateral kinematism comprises four connecting rods: a first connecting rod 111 adapted to be integrally fixed to the bicycle frame, a second connecting rod 112 opposite the first connecting rod 111 in the articulated quadrilateral 110 and consisting, in particular, of a fork for guiding the chain above the toothed crowns of the bottom bracket of the bicycle, a third connecting rod 113 that connects the first connecting rod 111 to the second connecting rod 112 and a fourth connecting rod, not illustrated for the sake of simplicity of representation, opposite the third connecting rod 113 and also connecting the first connecting rod 111 to the second connecting rod 112.

The derailleur 100 is adapted to be associated with a seat tube 200 of a bicycle through an attachment device 10 in accordance with the present invention. In particular, the attachment device 10 is adapted to associate the derailleur 100 with a conventional support 300 integrally associated with the seat tube 200 of the bicycle. Typically, the support 300 is welded to the seat tube 200 and is commonly known with the term braze-on attachment. It consists of a metallic element having a convex cylindrical surface and provided with a slot 301 extending along the direction of the longitudinal axis of the seat tube 200; such a slot 301 allows the adjustment of the position of the derailleur along an axis X substantially parallel to the longitudinal axis of the seat tube 200.

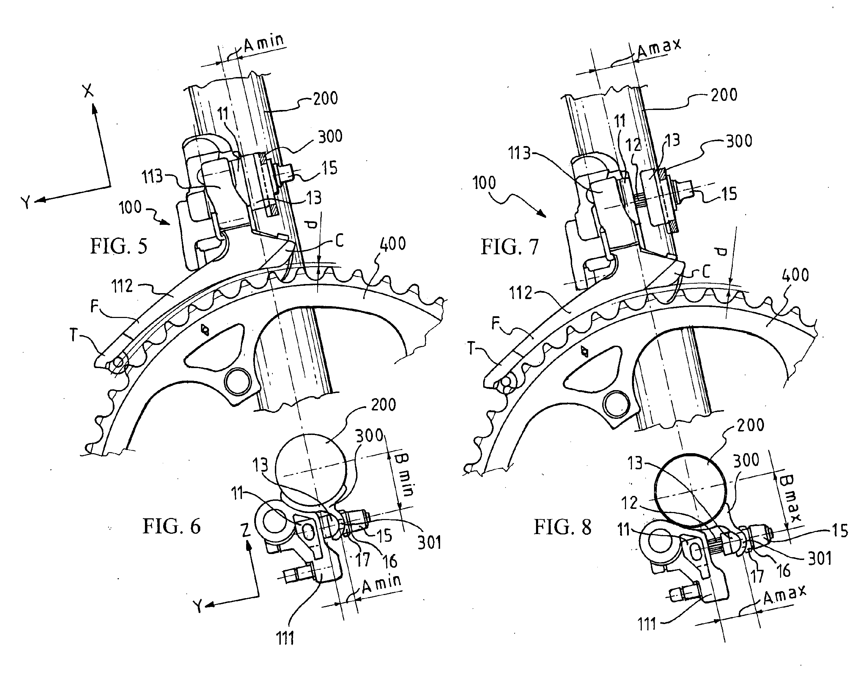

The attachment device 10 comprises, in particular, a derailleur support element 11 adapted to be integrally associated with the support 300 so as to be able to adjust the position of the derailleur 100 in a plane Y-Z substantially perpendicular to the longitudinal axis of the seat tube 200. In particular, the derailleur support element 11 is adapted to be integrally associated with the support 300 so as to be able to adjust the position of the derailleur 100 along an axis Y lying on a plane substantially parallel to a lying plane of a toothed crown 400 (shown in figures 5 and 7) of the bottom bracket of the bicycle (i.e. along an axis substantially perpendicular to the axis X of the seat tube 200 and to an axis of rotation of the toothed crown 400) and also along an axis Z substantially perpendicular to the lying plane of the toothed crown 400 (i.e. along an axis substantially perpendicular to the axis X of the seat tube 200 and parallel to the axis of rotation of the toothed crown 400).

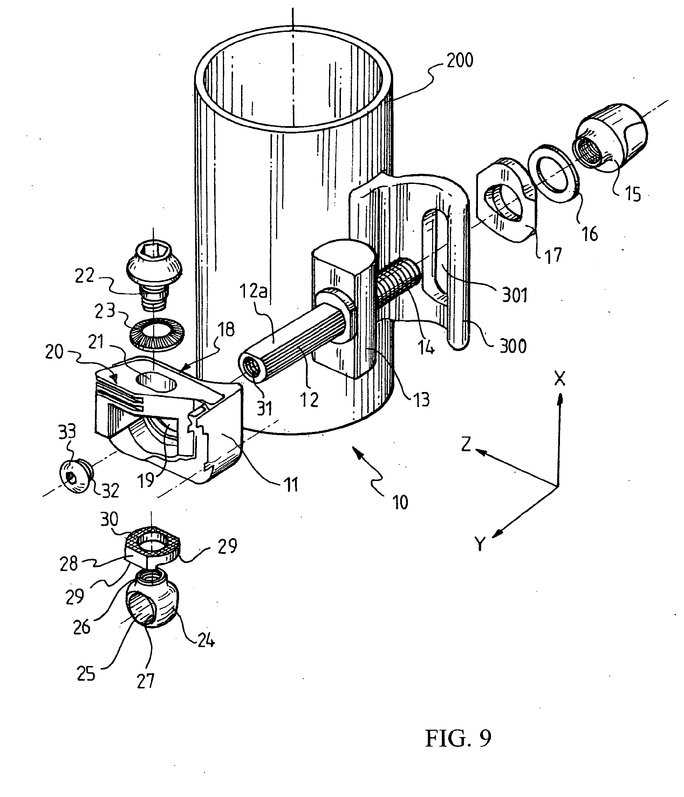

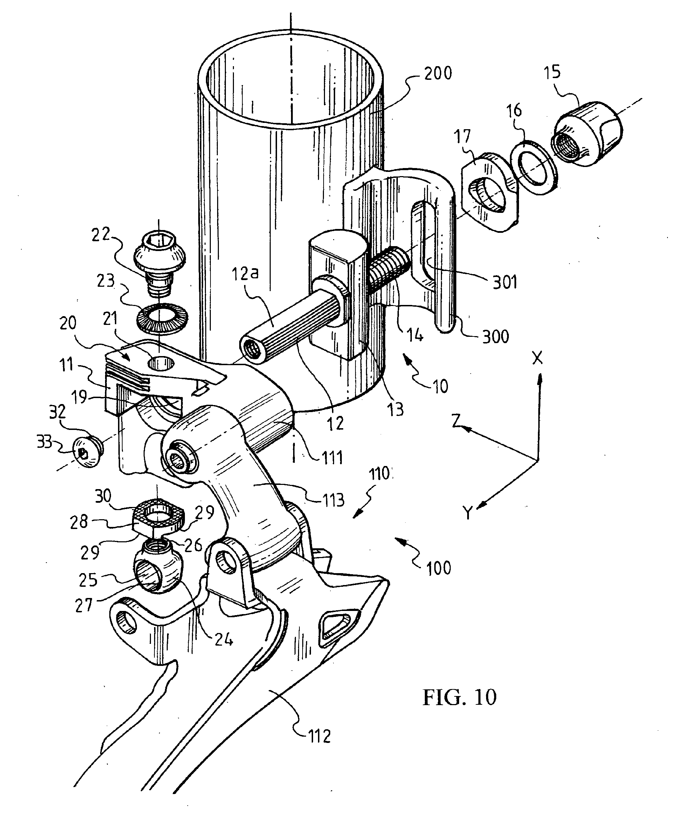

In the embodiment illustrated in figures from 3 to 8 and in figure 10, the derailleur support element 11 is integrally formed (in particular co-moulded) with the connecting rod 111 of the articulated quadrilateral 110. However, an alternative embodiment, illustrated in figure 9, is foreseen, in which the derailleur support element 11 is formed as a body structurally independent from the connecting rod 111 and is adapted to be integrally associated with said connecting rod 111 through conventional attachment means.

The adjustment of the position of the derailleur along the axes X, Y and Z can thus be led to the adjustment of the position of the derailleur support element 11.

For such a purpose, the derailleur support element 11 is slidably associated with a pin 12 integrally associated with an interconnection element 13 that in turn has, on the opposite side to the pin 12, a screw 14, preferably extending on the longitudinal axis of the pin 12. The interconnection element 13 comprises, at the side of the screw 14, a concave cylindrical surface matching the convex surface of the support 300 and adapted to operate in abutment against this surface. In the assembled configuration of the device of the present invention, the screw 14 and the pin 12 extend along said axis Y.

The pin 12 preferably comprises a substantially flat side surface 12a, whereas the remaining side surface is knurled longitudinally.

The screw 14 is adapted to be engaged through the slot 301 of the support 300 in a nut screw 15 to allow the attachment of the interconnection element 13 to the support 300. The coupling between slot 301 and screw 14 is such as to allow the adjustment of the position of the element 13 on the support 300 along the axis X parallel to the longitudinal axis of the seat tube. A first flat washer 16 and a second shaped washer 17, that has a flat surface for coupling with the flat washer 16 and, on the other side, a convex cylindrical surface for coupling with the surface of the support 300, are placed between the nut screw 15 and the support 300.

The derailleur support element 11 comprises a first side surface 18 provided with a first opening 19, preferably consisting of a slotted hole, for the passage of the pin 12, and a second side surface 20 substantially perpendicular to the first side surface 18 and provided with a second opening 21, also preferably consisting of a slotted hole, for the passage of a screw 22. A washer 23 is provided between the surface 20 and the screw 22 at the opening 21. In the assembled configuration of the device of the present invention, the slotted holes 19 and 21 extend along said axis Z.

The device 10 of the invention also comprises a pawl 24 provided with a through hole 25 extending along a first direction and with a threaded hole 26 extending along a second direction perpendicular to the aforementioned first direction. In the assembled configuration of the device of the present invention, the through hole 25 extends along said axis Y and slidably receives the pin 12, whereas the threaded hole 26 extends parallel to the longitudinal axis of the seat tube and engages the screw 22 so as to clamp the pawl 24 against the derailleur support element 11. The through hole 25 of the pawl 24 defines in the pawl 24 a clamping surface 27 for the pin 22.

A collar 28 is operatively placed between the pawl 24 and the derailleur support element 11. The collar 28, in particular, is fitted onto the pawl 24 at the threaded hole 26 and comprises, at the side of the pawl 24, an undercut defining a pair of substantially flat surfaces 29 adapted to exert a thrusting action against the flat surface 12a of the pin 12 when this is inserted in the through hole 25 of the pawl 24 and the pawl 24 is clamped against the derailleur support element 11 through the engagement of the screw 22 in the threaded hole 26 of the pawl 24.

The collar 28 comprises, on the opposite side to said pair of flat surfaces 29, a knurled surface 30.

The pin 12 has a head threading 31 adapted to engage a screw 32 provided with a head 33 with a diameter greater than the diameter of the pin 12 to avoid that, in the assembled configuration of the device 10 of the present invention, the group consisting of the pawl 24 and collar 28 could come away from the pin 12.

In the assembled configuration, the derailleur 100 and the attachment device 10 of the present invention are as shown in figure 4. In such a configuration, the interconnection element 13 is in abutment against the support 300 and kept here by means of the clamping coupling between screw 14 and nut screw 15. The pin 12 is inserted in the slotted hole 19 of the derailleur support element 11 and in the through hole 25 of the pawl 24. The collar 28 is fitted onto the pawl 24 and rested upon the flat surface 12a of the pin 12. The screw 22 is inserted in the slotted hole 21 of the derailleur support element 11 through the collar 28 and is engaged in the threaded hole 26 of the pawl 24. Finally, the screw 32 is engaged in the head threaded hole 31 of the pin 12.

Less preferred embodiments of the device 10 of the present invention can be foreseen, in which at least one of the openings 19 and 21, or both, instead of having a slotted hole as described above, has a circular hole with substantially the same diameter as the diameter of the pin 12 and/or the screw 22. One of such embodiments is illustrated in figure 10, where an opening 21 is shown consisting of a circular hole with substantially the same diameter as the diameter of the screw 22. In such less preferred embodiments it is still possible to carry out the adjustment of the position of the derailleur along the aforementioned axis Y, whereas any possibility of adjustment of the position of the derailleur along the aforementioned axis Z is prevented.

To carry out the assembly of the derailleur 100 on the bicycle, the derailleur support element 11 is brought into abutment against the interconnection element 13 by inserting the pin 12 into the slotted hole 19. The interconnection element 13 is then brought into abutment against the support 300 of the seat tube 200 by inserting the screw 14 in the slot 301 and is fixed at the optimal height on the support 300 by screwing the nut screw 15 onto the screw 14. In this way the adjustment of the position of the derailleur along the axis X parallel to the longitudinal axis of the seat tube 200 is carried out.

After such an adjustment, the adjustments along the axes Y and Z are carried out. For such a purpose, the screw 22 is kept in pre-screwing condition in the threaded hole 26 of the pawl 24 whereas the derailleur support element 11 is displaced along the axes Y and Z.

The adjustment of the position of the derailleur along the axis Y is carried out by making the derailleur support element 11 slide on the pin 12 along the direction Y. The adjustment of the position of the derailleur along the axis Z, on the other hand, is carried out by making the derailleur support element 11 slide on the pin 12 along the direction Z integrally with the pawl 24, the collar 28, the screw 22 and the washer 23. In particular, the pin 12 slides along the direction Z inside the first slotted hole 19 of the derailleur support element 11, whereas the screw 22 slides along the direction Z inside the second slotted hole 21 of the derailleur support element 11. Once the desired position has been reached, the screw 22 is clamped definitively in the threaded hole 26 of the pawl 24, thus fixing the derailleur support element 11 into position on the pin 12 and, therefore, fixing the derailleur 100 in position above the toothed crowns of the bottom bracket of the bicycle.

Figures 5 and 6 show the use of the device 10 of the present invention to fix the derailleur 100 to a first type of support 300 identical to the braze-on attachment S illustrated in figures 1A and 1B and discussed previously.

Figures 7 and 8 show the use of the device 10 of the present invention to fix the derailleur 100 to a second type of support 300 and to a seat tube 200 identical to the braze-on attachment S and to the seat tube illustrated in figures 2A and 2B and discussed previously. It can immediately be seen and understood from such figures how, thanks to the possibility of adjusting the position of the derailleur along the axis Y, it is possible to achieve an optimal positioning of the fork above the toothed crown 400, i.e. a positioning such that the distance between the lower profile of the fork F and the circumference of the toothed crown 400 is always constant between the head T and the tail C of the fork, irrespective of the type of braze-on attachment used and/or the size of the seat tube of the bicycle. It can also be seen and understood from such figures how, thanks to the possibility of adjusting the position of the derailleur along the axis Z, it is possible to bring the derailleur support element 11 into direct abutment against the seat tube 200, thus allowing part of the forces generated by the deformation of the articulated quadrilateral to be discharged directly onto the seat tube 200 and thus avoiding overstressing of the support 300.

Of course, a man skilled in the art can make modifications and variants to the embodiments of the invention described above in order to satisfy specific and contingent operational requirements, these modifications and variants falling, in any case, within the scope of protection as defined by the subsequent claims.

## Claims

1. Device (10) for the attachment of a derailleur (100) to a bicycle, **characterised in that** it comprises first means for adjusting the position of the derailleur (100) along at least one axis substantially perpendicular to a longitudinal axis of a seat tube (200) of a bicycle.

2. Device (10) according to claim 1, wherein said first means for adjusting the position of the derailleur (100) comprise means for adjusting the position of the derailleur (100) along an axis Y lying on a plane substantially parallel to a lying plane of a toothed crown of a bottom bracket of a bicycle.

3. Device (10) according to claim 1 or 2, wherein said first means for adjusting the position of the derailleur (100) comprise means for adjusting the position of the derailleur (100) along an axis Z substantially perpendicular to a lying plane of a toothed crown of a bottom bracket of a bicycle.

4. Device (10) according to any one of the previous claims, also comprising second means for adjusting the position of the derailleur (100) along an axis X substantially parallel to said longitudinal axis of the seat tube (200).

5. Device (10) according to claim 2 or according to claim 3 or 4 when dependent on claim 2, wherein said means for adjusting the position of the derailleur (100) along said axis Y comprise:
- a pin (12) adapted to be integrally associated with a support (300) integrally associated with said seat tube (200) and extending along said axis Y;
- a derailleur support element (11) adapted to be slidably associated with said pin (12) along said axis Y;
- first clamping means of said derailleur support element (11) on said pin (12).

6. Device (10) according to claim 5, wherein said derailleur support element (11) is integrally formed with a connecting rod (111) of an articulated quadrilateral (110) for commanding the derailleur.

7. Device (10) according to claim 5, wherein said derailleur support element (11) is adapted to be integrally associated with a connecting rod (111) of an articulated quadrilateral (110) for commanding the derailleur.

8. Device (10) according to any one of claims from 5 to 7, wherein said derailleur support element (11) comprises a first side surface (18) provided with a first opening (19) for the passage of said pin (12) and a second side surface (20) substantially perpendicular to said first side surface (18) and provided with a second opening (21), and wherein said first means for clamping said derailleur support element (11) on said pin (12) comprise:
- a pawl (24) provided with a first through hole (25) extending along a first direction and defining a clamping surface (27) for said pin (12), and with a first threaded hole (26) extending along a second direction perpendicular to said first direction;
- a threaded element (22) adapted to be engaged in said first threaded hole (26) of said pawl (24) through said second opening (21) of said derailleur support element (11) to clamp said pawl (24) against said derailleur support element (11);
- thrusting means acting between said pin (12) and said derailleur support element (11) to thrust said pin (12) against said clamping surface (27) when said threaded element (22) is engaged in said first threaded hole (26) of said pawl (24).

9. Device (10) according to claim 8, wherein said thrusting means comprise a collar (28) adapted to be fitted onto said pawl (24) at said first threaded hole (26) and provided with a pair of thrusting surfaces (29) adapted to force said pin (12) against said clamping surface (27) when said threaded element (22) is engaged in said first threaded hole (26) of said pawl (24).

10. Device (10) according to claim 9, wherein said thrusting surfaces (29) are substantially flat.

11. Device (10) according to claim 9 or 10, wherein said collar (28) comprises a knurled surface (30) at the opposite side to said pair of thrusting surfaces (29).

12. Device (10) according to any one of claims from 5 to 11, wherein said pin (12) comprises a knurled side surface.

13. Device (10) according to claim 12, wherein said side surface is knurled longitudinally.

14. Device (10) according to any one of claims from 5 to 13, wherein said pin (12) comprises a portion of side surface (12a) which is substantially flat.

15. Device (10) according to any one of claims from 8 or 14, wherein said first opening (19) is a slotted hole extending along a direction substantially perpendicular to said axis Y and to said longitudinal axis of the seat tube (200).

16. Device (10) according to any one of claims 8 or 14, wherein said first opening (19) is a circular hole with substantially the same diameter as the diameter of said pin (12).

17. Device (10) according to any one of claims from 8 to 16, wherein said second opening (21) is a slotted hole extending along a direction substantially perpendicular to said axis Y and to said longitudinal axis of the seat tube (200).

18. Device (10) according to any one of claims from 8 to 16, wherein said second opening (21) is a circular hole with substantially the same diameter as the diameter of said threaded element (22).

19. Device (10) according to any one of claims from 5 to 18, comprising a screw (32) provided with a head (33) with a diameter greater than the diameter of said pin (12) and wherein said pin (12) comprises a threaded head hole (31) adapted to engage said screw (32).

20. Device (10) according to any one of claims from 5 to 19, wherein said pin (12) is integrally associated with an interconnection element (13) having a cylindrical surface with a shape matching the surface of said support (300) and wherein said interconnection element (13) is adapted to be integrally associated with said support (300) through second clamping means adjustable in position along a direction substantially parallel to said longitudinal axis of the seat tube (200).

21. Device (10) according to claim 20, wherein said second clamping means comprise a screw (14) integrally associated with said interconnection element (13) at the opposite side to said pin (13), said screw (14) being adapted to be engaged in a nut screw (15) through a slot (301) formed in said support (300) and extending parallel to said longitudinal axis of the seat tube (200).

22. Derailleur (100) for a bicycle gearshift, comprising:
- a fork (112);
- an articulated quadrilateral kinematism (110) for commanding the fork (112);
- a device for the attachment of the articulated quadrilateral kinematism (110) to a bicycle;
**characterised in that** said attachment device is a device (10) according to any one of the previous claims.

23. Derailleur according to claim 22, wherein said attachment device (10) comprises a support element (11) for said articulated quadrilateral kinematism (110) adapted to be associated with a support (300) integrally associated with a seat tube (200) of a bicycle, wherein said support element (11) for the articulated quadrilateral kinematism (110) is integrally formed with a connecting rod (111) of said articulated quadrilateral kinematism (110).

24. Derailleur according to claim 22, wherein said attachment device (10) comprises a support element (11) for said articulated quadrilateral kinematism (110) adapted to be associated with a support (300) integrally associated with a seat tube (200) of a bicycle, wherein said support element (11) for the articulated quadrilateral kinematism (110) can be integrally associated with a connecting rod (111) of said articulated quadrilateral kinematism (110).

## Amended claims

### Amended claims in accordance with Rule 86(2) EPC.

**1.** Device (10) for the attachment of a derailleur (100) to a bicycle, **characterised in that** it comprises first means for adjusting the position of the derailleur (100) along at least one axis substantially perpendicular to a longitudinal axis of a seat tube (200) of a bicycle.

**2.** Device (10) according to claim 1, wherein said first means for adjusting the position of the derailleur (100) comprise means for adjusting the position of the derailleur (100) along an axis Y lying on a plane substantially parallel to a lying plane of a toothed crown associated with a bottom bracket of a bicycle.

**3.** Device (10) according to claim 1 or 2, wherein said first means for adjusting the position of the derailleur (100) comprise means for adjusting the position of the derailleur (100) along an axis Z substantially perpendicular to a lying plane of a toothed crown associated with a bottom bracket of a bicycle.

**4.** Device (10) according to any one of the previous claims, also comprising second means for adjusting the position of the derailleur (100) along an axis X substantially parallel to said longitudinal axis of the seat tube (200).

**5.** Device (10) according to claim 2 or according to claim 3 or 4 when dependent on claim 2, wherein said means for adjusting the position of the derailleur (100) along said axis Y comprise:
- a pin (12) adapted to be integrally associated with a support (300) integrally associated with said seat tube (200) and extending along said axis Y;
- a derailleur support element (11) adapted to be slidably associated with said pin (12) along said axis Y;
- first clamping means of said derailleur support element (11) on said pin (12).
